(19) Europäisches Patentamt
European Patent Office
Office européen des brevets

(11) **EP 2 783 787 B1**

(12) **EUROPÄISCHE PATENTSCHRIFT**

(45) Veröffentlichungstag und Bekanntmachung des Hinweises auf die Patenterteilung:
**03.05.2017   Patentblatt 2017/18**

(51) Int Cl.:
***B23K 26/0622*** *(2014.01)*       ***B23K 26/14*** *(2014.01)*
***G02F 1/35*** *(2006.01)*           ***B23K 9/073*** *(2006.01)*

(21) Anmeldenummer: **14161773.8**

(22) Anmeldetag: **26.03.2014**

(54) **Vorrichtung zur lichtbogenbasierten, laserunterstützten Bearbeitung eines Werkstücks, insbesondere zu dessen Lichtbogenschweißen oder -schneiden**

Device for arc based, laser-supported machining of a workpiece, in particular for arc welding or cutting

Dispositif d'usinage d'une pièce à l'arc supporté par un laser, notamment pour son soudage ou sa découpe à l'arc

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.03.2013   DE 102013205684**

(43) Veröffentlichungstag der Anmeldung:
**01.10.2014   Patentblatt 2014/40**

(73) Patentinhaber:
• **BLZ BAYERISCHES LASERZENTRUM GEMEINNÜTZIGE FORSCHUNGSGES. MBH**
  **91052 Erlangen (DE)**
• **Friedrich-Alexander-Universität Erlangen-Nürnberg**
  **91054 Erlangen (DE)**

(72) Erfinder:
• **Cvecek, Kristian**
  **91054 Erlangen (DE)**
• **Schmidt, Michael**
  **91054 Erlangen (DE)**

(74) Vertreter: **Rau, Schneck & Hübner Patentanwälte Rechtsanwälte PartGmbB Königstraße 2 90402 Nürnberg (DE)**

(56) Entgegenhaltungen:
WO-A1-2011/029462        WO-A1-2013/034564
DE-T5-112008 003 101     JP-A- 2008 221 223
US-A- 5 726 855

EP 2 783 787 B1

**Beschreibung**

Die Erfindung betrifft eine Vorrichtung zur lichtbogenbasierten, laserunterstützten Bearbeitung eines Werkstücks, insbesondere zu dessen Lichtbogenschweißen oder -schneiden.

Lichtbogenschweißen und -schneiden sind weitverbreitete Verfahren, die in verschiedenen Bereichen Verwendung finden, in denen metallische Wer"kstoffe mit hoher Leistung gefügt oder getrennt werden. Der Vorteil der auf einem Lichtbogen basierenden Technik liegt in erster Linie darin, dass das Werkstück mit einer hohen Leistung bearbeitet werden kann, die im Vergleich beispielsweise zu einer ebenfalls üblichen Laserbearbeitung mit geringerem apparatetechnischen Aufwand erzeugt werden kann.

Da die gängigen Lichtbogen-Verfahren auf der Anwendung eines Elektrodenpaares mit einer ersten Prozesselektrode und der durch das Werkstück selbst gebildeten zweiten Elektrode beruhen, deren Abstand zueinander im Bereich weniger Zentimeter relativ gering ist, wird in der Regel ein aufwendiges Portal- oder mehrachsiges Roboter-Handlingssystem benötigt, um eine automatisierte Bearbeitung durchzuführen. Damit benötigt die Bearbeitung komplexerer zweidimensionaler Geometrien eine deutlich längere Zeit, wie die übliche Laserbearbeitung mit einem Galvanometer-Scanner. Ein weiterer Nachteil der lichtbogenbasierten Bearbeitungsverfahren ist die Veränderung des elektrischen Potentials zwischen den Elektroden aufgrund der räumlichen Form des zu bearbeitenden Werkstückes. Dadurch sind die lichtbogenbasierten Bearbeitungsverfahren auf ebene und definierte, relativ flache dreidimensionale Formen beschränkt.

Im Einzelnen sind folgende Ausführungen zum Hintergrund der Erfindung und zum relevanten Stand der Technik bei lichtbogen- und laserbasierten Bearbeitungsverfahren zu beachten:

Die lichtbogenbasierten Verfahren können in der Regel nur für die Bearbeitung von leitenden Materialien eingesetzt werden. Dabei wird zwischen dem Werkstück und einer in der Nähe befindlichen Elektrode eine Spannung angelegt. Übersteigt diese Spannung die Durchschlagsfestigkeit des gasförmigen Mediums zwischen Werkstück und Elektrode, so kann eine elektrische Entladung auftreten. Bei der Entladung wird das gasförmige Medium ionisiert, wodurch bei ausreichender Stromstärke ein kontinuierlicher Stromfluss zwischen Werkstück und Elektrode ermöglicht wird. Der Stromfluss durch den Lichtbogen bewirkt an der Eintrittsstelle am Werkstück eine lokale Aufheizung, die zum Schmelzfügen oder Trennen des Werkstücks eingesetzt werden kann.

Wie aus Standardwerk von R. Killing, U. Killing: "Kompendium der Schweißtechnik - Band 1: Verfahren der Schweißtechnik", Verlag für Schweißen und verwandte Verfahren DVS-Verlag GmbH, Düsseldorf. 2002, 2. überarbeitete Auflage (im Folgenden: "Killing-Kompendium") hervorgeht, ist eine weit verbreitete Variante des Lichtbogenschweißens das Wolfram-Inertgasschweißen (WIG-Schweißen), bei dem eine Wolfram-Elektrode verwendet wird, um den hohen Temperaturen im Lichtbogen standhalten zu können, während eine Oxidierung der Elektrode und des Werkstücks durch ein inertes Gas (meist Edelgas) verhindert wird. Um einen definierten Eintrittsort des Lichtbogens in das Werkstück zu erhalten, muss die Elektrode relativ nah am Werkstück geführt werden, damit der Lichtbogen weder durch etwaige Potentialverläufe am Werkstück - z.B. durch eine räumliche Form oder Lage des Werkstücks - noch durch einen thermischen Auftrieb des heißen Plasma im Lichtbogen abgelenkt wird.

Eine Verbesserung der Positioniergenauigkeit des Lichtbogens ermöglicht laut Killing-Kompendium das sogenannte Plasma-Schweißen, bei dem das Plasma durch eine Hochspannungsentladung schon innerhalb der Elektrode erzeugt wird, bevor es dann unter hoher Geschwindigkeit durch eine Düse austritt. Die zwischen Werkstück und Elektrode (Plasmadüse) angelegte Spannung bewirkt nun ebenfalls einen Strom, welcher das Werkstück lokal aufheizen kann. Die Düse erlaubt eine Fokussierung des Plasmastroms, so dass eine größere Distanz zwischen Werkstück und Elektrode positionsgenau elektrisch überbrückt werden kann. Zusätzlich zum Plasmastrom wird häufig ein inertes Prozessgas verwendet, um eine Oxidation der Elektrode und des Werkstücks zu vermeiden. Aber selbst beim Plasma-Schweißen wird der mögliche Abstande zwischen Werkstück und Elektrode durch etwaige Potentialverläufe sowie Strömungseffekte limitiert.

Eine weitere Verbesserung der Führungsgenauigkeit eines Lichbogens kann mit Hilfe des Hybrid-Schweißens erreicht werden, bei dem zusätzlich zum Lichtbogen ein Laserstrahl verwendet wird, wie dies aus M. Schnick, S. Rose, U. Füssel, A. Mahrle, C. Demuth und E. Beyer, "Numerische und experimentelle Untersuchungen zur Wechselwirkung zwischen einem Plasmalichtbogen und einem Laserstrahl geringer Leistung" DVS-Bericht, Düsseldorf: DVS-Verlag, 275:612-617, (2011) bekannt ist. Der Laserstrahl dient dazu, die Werkzeugoberfläche sowie den inneren Plasmabereich des Lichtbogens aufzuheizen, um lokal am Werkstück sowie im Lichtbogen im Vergleich zum herkömmlichen Lichtbogenschweißen einen schnelleren Übergang vom festen in den gasförmigen bzw. plasmaförmigen Zustand zu erreichen. Durch die so erzielten höheren Temperaturen und Plasmadichten entlang des Laserstrahls verbessert sich die Führungsstabilität des Lichtbogens bis zum Werkstück.

Allen Lichtbogenverfahren ist gemein, dass der Prozess und damit das Bearbeitungsergebnis durch eine Vielzahl an Parametern beeinflusst werden kann, so z.B. durch die Wahl der Spannungsrichtung (Polung), eine Einstellung einer zeitlichen Modulation der Spannung oder Stromstärke (Wechselstrom-, Gleichstrom- oder Impulsbetrieb) oder durch den Einsatz von Prozessgasen. Generell bleiben jedoch die Lichtbogen-basierten Verfahren auf verhältnismäßig flache Geometrien und geringe Abstände zwischen Werkstück und Elektrode beschränkt, damit die Führungsstabilität des Lichtbogens gewährleistet bleibt.

Dies bedeutet vor allem bei automatisierten Systemen, dass eine aufwendige Nachführung erforderlich ist, die verbunden mit der Massenträgheit der Elektroden, die oft an eine Wasserkühlung angeschlossen sein müssen, nur begrenzte Verfahrgeschwindigkeiten ermöglicht. Diese Limitierung steht im Gegensatz zu der Tatsache, dass auch deutlich höhere elektrische Leistungen relativ leicht erzeugt werden können, wodurch theoretisch höhere Vorschubgeschwindigkeiten möglich wären. Ein weiterer Nachteil vieler Lichtbogenverfahren ist die notwendige höhere Zündspannung oder Verkleinerung des Elektroden-Werkstück-Abstandes für die initiale Erzeugung des Lichtbogens. Dadurch ergibt sich insbesondere bei Punktschweißungen ein höherer technischer oder zeitlicher Aufwand.

Eine wichtige Rolle bei elektrischen Schweißverfahren spielt laut Killing-Kompendium das Elektronenstrahlschweißen, was ein sehr gutes Aspektverhältnis der Einbrandbreite zur Einbrandtiefe aufweist. Dadurch lassen sich laut T. Seefeld, W. O'Neill: "Cutting and welding with the new high brightness lasers", The Laser User, Issue 50, Spring 2008, pp. 32-37 effizient auch sehr dicke Werkstücke im Keyhole-Verfahren fügen. In der Regel wird dabei die Schweißung am Werkstück im Vakuum durchgeführt, um ein Abbremsen und Streuen des Elektronenstrahls an Luftmolekülen zu verhindern. Hierbei kann der Elektronenstrahl mit Hilfe von Elektroden schnell abgelenkt werden. Dies setzt jedoch voraus, dass das Werkstück ebenfalls im Vakuum bearbeitet wird.

Im Gegensatz zu den oben beschriebenen lichtbogenbasierten Verfahren ermöglicht die Remote-Laserstrahl-Bearbeitung von Werkstücken eine Bearbeitung quasi aus der Ferne, wodurch sehr hohe Vorschubgeschwindigkeiten auf dem Werkstück realisiert werden können. Eine solche Bearbeitungsstation beinhaltet im Wesentlichen einen Laser, dessen Laserstrahl mit Hilfe einer Scanner-Optik über das Werkstück geführt wird. Der Laserscanner besteht in der Regel aus zwei galvanometrisch angetriebenen Spiegeln, welche den Laserstrahl ablenken. Dieser Strahl wird im Anschluss durch eine Optik auf das Werkstück fokussiert. Die maximal möglichen Vorschubgeschwindigkeiten des Strahls auf dem Werkstück sind lediglich durch die Massenträgheit der Scannerspiegel und die Auslegung der Fokussieroptik (z. B. Arbeitsabstand) limitiert.

Für das Schmelzfügen von Metallen werden meist höhere Laserleistungen als bei elektrischen Verfahren, wie eben z. B. lichtbogenbasierten Verfahren benötigt, da beim Laserbearbeiten von Metallen ein gewisser Teil der Leistung durch Reflexionen verloren geht. Laser mit den entsprechenden Leistungen werden zwar produziert, der anlagentechnische Aufwand ist im Vergleich zu Lichtbogenverfahren jedoch deutlich höher, da viele Lasertypen begrenzten Wirkungsgrad haben und dadurch eine aufwendige Kühlung notwendig wird. Bei entsprechend hohen Laserleistungen im kW-Bereich werden in diesem Zusammenhang größere, aktiv gekühlte Ablenkspiegel im Laserscanner notwendig, wodurch sich zwangsläufig die Trägheit des Ablenksystems erhöht und sich dementsprechend die möglichen Vorschubgeschwindigkeiten reduzieren. Trotzdem ist die Remote-Laserstrahlbearbeitung den Lichtbogenverfahren bei Werkstücken mit komplexer Geometrie oft überlegen, da die Vorschubgeschwindigkeiten in der Regel höher sind und auf Potentialverläufe nicht eingegangen werden muss.

Ein weiterer Stand der Technik ist durch die US 6 483 077 B1 repräsentiert, die ein Verfahren zur Erzeugung, zum Leiten und zur Begrenzung eines elektrischen Entladungslichtbogens offenbart, das als Laserunterstützter Lichtbogenschweiß-Prozess ("laser assisted arc welding" - LAAW process) bezeichnet wird. Dabei wird in einer Bearbeitungskammer ein Gas, wie Kohlenmonoxid verwendet, das mit Hilfe eines Kohlenmonoxid-Lasers vibronisch bis zur Ionisierungsschwelle angeregt wird. Die ionisierten Moleküle erzeugen entlang des Laserstrahls einen gerichteten, leitfähigen Plasmakanal, welcher zur gezielten Kanalisierung elektrisch erzeugter Lichtbögen genutzt werden kann. Aufgrund der Toxizität von Kohlenmonoxid ist natürlich eine Ausstattung der Bearbeitungsanlage notwendig, die ein versehentliches Entweichen und Einatmen des Gases verhindert. Da dies zu einem erhöhten anlagentechnischen Aufwand führt, wurden laut dem vorgenannten Dokument weiterführende Untersuchungen zu möglichen Kombinationen von Laserstrahlquellen und anzuregenden Gasen durchgeführt. Obwohl einige biologisch weniger giftige bis unbedenkliche Kombinationen identifiziert werden konnten, weist das LAAW-Verfahren gemäß US 6 483 077 B1 gewisse Nachteile auf.

So erfolgt die Laserstrahlausbreitung im LAAW-Verfahren linear. Bei definierten Parametern, wie einer Wellenlänge von 800 nm und einer Fokusgröße von 80 $\mu m$ hätte ein herkömmlicher Strahl im LAAW-Prozess im Idealfall eine Rayleighlänge von 18 mm. Dabei verbreitert sich der Strahldurchmesser von 80 $\mu m$ auf 113 $\mu m$. Die in der Praxis zu überbrückenden Distanzen sollen allerdings deutlich größer als 20 mm sein, und eher im Bereich > 100 mm liegen.

Neben der natürlichen Diffraktion des Laserstrahls bei der linearen Ausbreitung wird der Laserstrahl zusätzlich eine plasmabedingte Diffraktion erfahren, so dass seine Divergenz effektiv stärker sein wird, als in der rechnerisch dargestellten linearen Ausbreitung.

Damit ist beim LAAW-Verfahren vor allem bei größeren Arbeitsabständen eine Abnahme der Positioniergenauigkeit sowie der verfügbaren Energiefluenz

bei der elektrischen Entladung zu erwarten. Der erstere Effekt wirkt sich damit nachteilig auf die erzielbare Bearbeitungsgenauigkeit aus und der letztere wirkt sich nachteilig auf die Energieeinkopplung ins Werkstück vor allem bei Keyhole-Schweißprozessen aus, wie dies in T. Seefeld, W. O'Neill, a.a.O. näher erläutert ist.

Die WO 2007/145702 A2 betrifft eine Vorrichtung zum lichtbogenbasierten, lasergestützten Bearbeiten eines Werkstücks, bei der zwar die Verwendung eines UKP-Lasers offenbart ist. Eine Eignung der Vorrichtung zur Ausbildung eines Plasmakanals in Form eines Plasmafilamentes ist allerdings nicht gezeigt.

Die DE 102 13 044 B3 zeigt eine Vorrichtung zum Laserbearbeiten eines Werkstücks. Hierbei kommt ein UKP-Laser zum Einsatz, bei dem der Laserstrahl ein Filament ausbildet. Allerdings wird hier kein lichtbogenbasiertes, lasergestütztes Verfahren ausgeführt, da der Laser für die Werkstückbearbeitung genutzt wird und kein weiterer Lichtbogen vorhanden ist.

Der nächst kommende Stand der Technik ist durch die WO 2011/029462 A1 repräsentiert, die eine Vorrichtung zur lichtbogenbasierten, laserunterstützten Bearbeitung eines Werkstückes mit einer Kurzpuls-Laserquelle zur Erzeugung eines Kurzpuls-Laserstrahls und eines Plasma-Kanals über eine Strecke zwischen einem Kanal-Startpunkt und dem Werkstück, mit einer Laserstrahl-Ablenkeinrichtung und mit einer ortsfesten Hochspannungselektrode offenbart.

Ausgehend von den oben geschilderte n Problemen des Standes der Technik liegt der Erfindung die Aufgabe zugrunde, eine Vorrichtung zur lichtbogenbasierten, laserunterstützten Bearbeitung eines Werkstückes, insbesondere zu dessen Lichtbogenschweißen oder -schneiden, zu schaffen, die die Vorteile der zum Stand der Technik geschilderten Verfahren des Lichtbogenschweißens und der Remote-Laserstrahlbearbeitung kombiniert, um so eine Prozessoptimierung im Bezug auf die Geschwindigkeit und Einfachheit des Zugangs zum Werkstück mit den Leistungsvorteilen einer Lichtbogenprozessierung zu verknüpfen.

Diese Aufgabe wird durch die im Patentanspruch 1 angegebene Bearbeitungsvorrichtung mit folgenden Merkmalen gelöst:

- eine Ultrakurzpuls-(UKP-)Laserquelle zur Erzeugung eines Ultrakurzpuls-(UKP-)Laserstrahls, wobei durch Selbstfokussierung des UKP-Laserstrahls ein Plasma-Filament über eine Filament-Strecke zwischen einem Filament-Startpunkt und dem Werkstück entsteht und dabei das Plasma-Filament über die Filament-Strecke divergenzfrei ist,
- einer UKP-Laserstrahl-Ablenkeinrichtung zur Führung des UKP-Laserstrahls in einen Raumwinkel in Richtung des Werkstückes,
- eine mit der UKP-Laserstrahl-Ablenkeinrichtung derart kooperierende Abbildungsoptik für den UKP-Laserstrahl , dass der UKP-Laserstrahl durch einen im Wesentlichen ortsfesten und raumwinkelunabhängigen Pivot-Punkt läuft, der in der Filament-Strecke liegt, und
- eine ortsfeste Hochspannungselektrode bei dem Pivot-Punkt zur Erzeugung eines filamentgeführten Lichtbogens zwischen Hochspannungselektrode und Werkstück.

Dabei ist der UKP-Laserstrahl zur Erzeugung des Plasma-Filamentes so eingestellt, dass seine Pulsspitzenleistung oberhalb, bevorzugterweise deutlich oberhalb (wie dem 5- bis 10-fachen oder mehr) der kritischen Leistung für Selbstfokussierung $P_{crit}$ eines gaußschen Strahls gemäß der Beziehung (vgl. G. Fibich, A.L. Gaeta: Critical power for self-focusing in bulk media and in hollow waveguides. Opt. Lett., 25(5):335-337, (2000))

$$P_{crit} = \frac{\alpha \cdot \lambda^2}{4\pi \cdot n_0 \cdot n_2}$$

mit

α: Materialunabhängige Konstante
λ: Wellenlänge des UKP-Laserstrahls
$n_0$: optische Brechzahl des Mediums
$n_2$: nichtlinearer Brechzahlkoeffizient

liegt.
Damit lassen sich gemäß einer Weiterbildung der Erfindung divergenzfreie Plasma-Filamente erzeugen, deren Halbwertsbreite-Durchmesser in der Größenordnung von Mikrometern, vorzugsweise bei 50 μm bis 150 μm, besonders bevorzugt 80 μm, und deren Länge in der Größenordnung von einigen Zentimetern bis Metern liegen.

Die Erfindung basiert im Übrigen auf der Erzeugung elektrisch leitender Plasma-filamente, die mittels ultrakurzer Laserpulse aufgrund einer dynamischen Wechselwirkung zwischen Selbstfokussierung, Plasmabildung und Defokussierung am erzeugten Plasma gebildet werden. Die Filamente können genutzt werden, um elektrische Entladungen beträchtlicher Leistung präzise und über längere Strecken im Freiraum zu führen und setzen dabei die zur Überwindung des Abstandes benötigte Durchschlagsspannung deutlich herab.

Diese Laserfilamente entstehen, indem ein Laserpuls mit einer Pulsspitzenleistung oberhalb der kritischen Leistung für Selbstfokussierung $P_{krit}$ aufgrund des nichtlinearen optischen Kerr-Effektes die natürliche Divergenz eines Gaußschen Strahls überwindet und sich selbst fokussiert, bis durch nichtlineare Absorptionsprozesse das Medium, in dem sich der Strahl ausbreitet, ionisiert wird. Das durch den Strahl erzeugte Plasma wirkt wiederum auf den Strahl zusätzlich defokussierend. Es ergibt sich ein dynamisches Gleichgewicht zwischen Selbstfokussierung einerseits und Divergenz durch natürliche sowie plasmabedingte Diffraktion andererseits, das die maximal mögliche Intensität im Filament limitiert. Für Pulsspitzenleistungen oberhalb von $P_{krit}$ führt dies zur Ausbildung eines ausgedehnten Plasmakanals, da nicht die gesamte Leistung an einer Stelle absorbiert werden kann. Erst nachdem ein Teil der Pulsenergie durch Plasmabildung verbraucht wird und die Pulsspitzenleistung unterhalb von $P_{krit}$ abfällt, divergiert der Strahl wieder. Abhängig von der Pulsenergie und -dauer können so Filamente von mehreren Metern bis Kilometern Länge erzeugt werden. Aufgrund des Plasmas innerhalb des Filaments ist das Filament leitfähig.

Diese Eigenschaften werden für eine schnelle Remote-Hochleistungsbearbeitung des Werkstücks ausgenutzt. Dazu wird ein Ultrakurzpuls-Laser verwendet, der mit Hilfe einer Laserstrahl-Ablenkeinrichtung, insbesondere eines vorzugsweise zweiachsigen Galvanometerscanners oder eines akusto-optischen Deflektors abgelenkt wird. Für die Fokussierung wird hier eine modifizierte Abbildungsoptik verwendet, bei welcher der Laserstrahl unabhängig von der Ablenkung immer den gleichen, werkstückseitigen Raumpunkt, den Pivot-Punkt durchquert, der ortsfest und raumwinkelunabhängig ist. Dadurch kann mittels einer nahen Elektrode unabhängig vom Bestrahlungsort am Werkstück eine kanalisierte Entladung erzeugt werden, wobei das Werkstück als zweite Elektrode dienen kann. Der Laser kann ferner so vorfokussiert und von der Pulsdispersion eingestellt werden, dass die Filamentbildung erst in der Nähe des Pivot-Punktes einsetzt.

Im Vergleich zu den oben erwähnten Parametern beim LAAW-Verfahren kann bei der erfindungsgemäßen Vorrichtung aufgrund der dauerhaften Einschnürung des Filamentes von einer höheren Bearbeitungspräzision und höherer Energiefluenz des Lichtbogens ausgegangen werden, da die Einschnürung des Filamentes auf 80 μm über deutlich größere Strecken von mehreren Metern (siehe Arbeit von A. Braun, G. Korn, X. Liu, D. Du, J. Squier and G. Mourou: Self-channeling of high-peak-power femtosecond laser pulses in air. Opt. Lett., 20(1):73-75, (1995).) im Vergleich zur linearen Strahlausbreitung bei gleicher Wellenlänge und Fokusdurchmesser gegeben ist. Dies wirkt sich vorteilhaft auf die Genauigkeit, das Bearbeitungsergebnis und das Aspektverhältnis der Einbrandtiefe zur -breite aus.

Bevorzugte Weiterbildungen der Erfindung sind in den abhängigen Ansprüchen angegeben.

Bevorzugte Weiterbildungen betreffen ferner die Abbildungsoptik der erfindungsgemäßen Vorrichtung, die zum einen eine eingangsseitige Aufweitungsoptik aufweisen kann. Damit lässt sich der werkstückseitige Fokuspunkt mit zunehmend größerer Brechkraft der Aufweitungsoptik in Richtung des Pivot-Punktes verschieben, wobei jedoch die Fokusgröße und damit die Strahltaille kleiner werden. Dies kann aufgrund der daraus resultierenden höheren Intensitäten des Laserstrahls zu einer Verkürzung der Länge des Filamentes führen. Über die Brechkraft der Aufweitungsoptik kann also eine entsprechende Optimierung der Prozessbedingungen erfolgen.

Gemäß einer weiteren bevorzugten Ausführungsform weist die Abbildungsoptik eine werkstückseitig hyperzentrische Projektionsoptik auf, sodass die Fokusposition des UKP-Laserstrahls zwischen der einfachen Linsenbrennweite der Projektionsoptik und dem Pivot-Punkt liegt. Die einfachste Umsetzung dieses optischen Aufbaus besteht darin, dass die Projektionsoptik in einem 4f-Aufbau mit einer Konvex-Linse derart angeordnet ist, dass eingangsseitig die UKP-Laserstrahl-Ablenkeinrichtung und werkstückseitig der Pivot-Punkt jeweils in einem Abstand der doppelten Brennweite von der Konvex-Linse angeordnet sind. Damit besitzt das optische System für alle Strahlen einen gemeinsamen Konvergenzpunkt, der dem vorgenannten Pivot-Punkt entspricht. Wird die Fokussierung so gewählt, dass das Filament in der Nähe bzw. vor dem Konvergenzpunkt erzeugt wird, so kann die laserseitige Elektrode in die Nähe des Konvergenzpunktes fest installiert werden. Da sich das Filament über den Konvergenzpunkt hinaus ausbildet, kann damit eine in der Richtung gezielt einstellbare, kanalisierte Entladung erzielt werden, deren Position durch das Strahlablenkungssystem vor dem optischen System vorgegeben wird.

Weitere Ausführungsformen der Erfindung beziehen sich auf die Ausbildung der Hochspannungselektrode, die durch eine Ringelektrode mit in der Ringöffnung liegendem Pivot-Punkt gebildet sein kann. Damit ist die Entladung zwischen der Elektrode und dem Werkstück möglichst wenig von dem durch die geometrische Krümmung der Elektrode entstehenden Eigenpotential der Elektrode beeinflusst. Um eine möglichst überall gleichmäßige Feldstärke auf der Elektrodenoberfläche zu bewirken, sind toroidale Ringelektroden eine bevorzugte Ausführungsform. In diesem Fall lässt sich eine spontane Entladung, die nicht vom Filament initiiert wird, mit größtmöglicher Wahrscheinlichkeit verhindern. Zusätzlich kann im Fall einer toroidalen Form der Elektrode bei entsprechenden Anschlüssen ein Kühlmittel wie Gas oder Flüssigkeit, bevorzugterweise Wasser, durch das Innere der Elektrode geleitet werden, um die Temperatur der Elektrode im Dauerbetrieb zu senken und so die Betriebsdauer der Elektrode zu erhöhen.

Weitere alternative Elektrodengeometrien sehen beispielsweise eine Spitzenelektrode, Gitterelektrode, Platinelektrode oder eine massive Elektrode bestehend aus einem leitfähigen, transparenten Material, wie beispielsweise Indiumtitanoxid (ITO) vor. Bei der erwähnten Gitterelektrode kann durch deren Öffnung der Laserstrahl und damit das Filament in Richtung zum Werkstück gelangen, sodass letzteres nur in einem Raster bildlich gesprochen "pixelweise" bearbeitet wird. Für bestimmte Anwendung kann dies ausreichend sein.

Bevorzugtermaßen wird die Hochspannungselektrode mit einer Gleich-oder Wechselspannung in einer Größenordnung von 100 kV bis wenigen MV betrieben. Um eine solche Hochspannung zur Verfügung zu stellen, sind verschiedenen Möglichkeiten bekannt.

So ist etwa ein Cockroft-Walton-Generator (oder auch Greinacher Konstruktion genannt) verwendbar, der z.B. in Teilchenbeschleunigern eingesetzt wird. Ein solcher Generator kann mit nachgeschalteten Kondensatoren genutzt werden, um eine hohe Gleichspannung zu erzeugen. Die nachgeschalteten Kondensatoren dienen dazu, die Ladungsmenge bzw. Stromstärke bei einer getriggerten Entladung zu erhöhen, da normalerweise die el. Kapazität eines solchen Generators relativ klein ist.

Ferner kann eine Tesla-Spule zum Einsatz kommen, die eine hochfrequente Hochspannung liefert. Die Entladung der Tesla-Spule kann dabei mit der Filamentbildung synchronisiert bzw. getriggert werden.

Ein Marx-Generator schließlich ist eine Gleichspannungsquelle für Entladungen mit hoher Spannung und Leistung. Hier muss die Entladung (ebenfalls wie bei der Tesla-Spule) mit der Bildung des Plasmafilaments synchronisiert oder getriggert werden.

Da sich das in der erfindungsgemäßen Vorrichtung ausbildende Plasma-Filament nicht nur in Gasen, wie beispielsweise Luft, sondern auch in transparenten Flüssigkeiten und Feststoffen ausbilden kann, kann auch ein transparentes Medium zur Ausbildung des Plasma-Filamentes zwischen Pivot-Punkt und Werkstück angeordnet sein. Dieses Medium kann gasförmig, flüssig oder fest sein und vorzugsweise erhitzt werden. Die Möglichkeit, verschiedene transparente Medien zu nutzen, eröffnet neuartige Prozessmöglichkeiten, um damit beispielsweise Kavitationseffekte zu nutzen, welche eine Schmelzanlagerung bei der Metallbearbeitung verhindern.

Gemäß einer Weiterbildung der Erfindung können einem gasförmigen Medium zur Ausbildung des Plasma-Filamentes Zusatzstoffe in dampfförmigen oder aerosolartigen Zustand beigemischt werden. Damit können bei einer anodischen Polung der Hochspannungselektrode ionisierte Atome des beigemischten Zusatzstoffes auf das Werkstück beschleunigt werden, um damit beispielsweise bestimmte stoffliche Eigenschaften des Werkstückes zu ändern.

Bei Werkstücken, die aus isolierenden Materialien bestehen, sehen unterschiedliche bevorzugte Weiterbildungen der erfindungsgemäßen Vorrichtung vor, zum einen eine elektrisch leitfähige Beschichtung auf dem Werkstück anzubringen. Damit kann das Werkstück wiederum als Gegenelektrode zur Hochspannungselektrode wirken, wie dies vom Lichtbogenschweißen oder -schneiden her bekannt ist.

Die filamentgestützte Erzeugung des Lichtbogens eröffnet darüber hinaus allerdings auch die Möglichkeit, bei einem Werkstück aus isolierendem Material den Lichtbogen durch die Hochspannungselektrode allein ohne eine durch das Werkstück gebildete Gegenelektrode zu generieren. Dies ist eine Betriebsweise der erfindungsgemäßen Vorrichtung, die sich grundlegend vom Lichtbogenprozessieren unterscheidet. Die Form und Spannung der Hochspannungselektrode werden dabei so gewählt, dass entweder freie Elektronen im Plasma des durch den Laser erzeugten Filamentes durch das Feld der Elektrode beschleunigt werden. Hierbei sind die Spannung und/oder Feldstärke an der Elektrode zu gering, dass Elektronen selbstständig aus ihr austreten können. Es erfolgt keine Streamerbildung. Die Feldstärke an der Elektrode kann aber auch hoch genug gewählt werden, um Elektronen der Elektrode zu ionisieren. Bei einer synchronen Taktung des zeitlichen Aufbaus der Feldstärke an der Elektrode und dem Entstehungszeitpunkt des Filamentes kann die Entladung der Elektrode durch das Filament kanalisiert werden. Es erfolgt eine synchrone Streamerbildung, die auch für nichtleitende Werkstücke komplett neue Möglichkeiten der Bearbeitung eröffnet, wie z.B. Strukturierung und Bearbeitung (im Sinne von Schmelzen und Schneiden) von Gläsern, Keramiken, Kunststoffen, Verbundmaterialien sowie organischen Materialien.

Gemäß einer weiteren bevorzugten Ausführungsform der Erfindung ist ein das elektrische Feld zwischen Hochspannungselektrode und Werkstück überlagerndes, statisches oder dynamisches Magnetfeld zur Lenkung der elektrischen Entladung an der Hochspannungselektrode in Richtung zum Plasma-Filament vorgesehen. Damit ist die Entladung der Elektrode im Filament zu kanalisieren. Somit kann als Elektrode bereits eine (angespitzte) Drahtspitze dienen, deren Entladung mit Hilfe des magnetischen Feldes in Richtung des Filamentes abgelenkt wird. Das magnetische Feld kann sowohl statisch zur Verfügung gestellt werden, als auch dynamisch zur Ablenkung der Entladung ausgeführt werden.

Da nach dem Einsetzen der Entladung über das Filament die Plasmadichte und die Temperatur sich im Filament stark erhöhen, vergrößern sich die Leitfähigkeit und der Stromfluss im Entladungskanal. Möglicherweise führt dies zu einem Ausbrechen der Entladung aus dem vom Filament vorgegebenem Plasmakanal. Damit das Ausbrechen der Entladung verhindert wird, ist es gemäß einer weiteren bevorzugten Ausführungsform vorgesehen, die Entladungskapazität der Hochspannungselektrode durch einen auf die Pulsrepetitionsrate des UKP-Laserstrahls synchronisierten Unterbrecher bei Gleichspannungsbetrieb oder eine auf die Pulsrepetitionsrate des UKP-Laserstrahls abgestimmte Wechselspannungsfrequenz bei Wechselspannungsbetrieb vorzusehen, damit nur eine begrenzte elektrische Ladung für die Entladung zur Verfügung stehen. Dies kann mit einer Spannungsquelle erreicht werden, die bei Gleichstrom über einen Unterbrecher verfügt bzw. Wechselstrom nutzt. Der Spannungsaufbau und Unterbrechung beim Gleichstrom (z.B. durch Ladungsbegrenzung) bzw. die Wechselstromfrequenz müssen dabei auf die Pulsrepetitionsrate des filamenterzeugenden Lasers synchronisiert oder abgestimmt sein.

Eine Weiterbildung der Erfindung sieht eine Fluidstrahl-Erzeugungseinrichtung zur Entfernung des durch das Plasma-Filament erhitzten Mediums nach einem Entladungslichtbogen vor. Damit kann die Stabilität des Entladungskanals weiter gesteigert werden, indem ein schnell strömendes Gas oder eventuell auch eine Flüssigkeit z.B. als Cross-Jet nach einer erfolgten Entladung das durch die Entladung erhitzte Medium aus dem Volumen zwischen Elektrode und Werkstück entfernt. Ein weiterer Nutzen eines solchen Cross-Jets ist die Kühlwirkung auf die Elektrode und die Werkstückoberfläche. Im Falle der Nutzung eines inerten Gases als Cross-jet-Medium kann zudem die Tendenz der heißen Oberflächen von Werkstück und Elektrode zur Oxidation verringert werden.

Gemäß einer weiteren vorteilhaften Ausführungsform der Erfindung kann eine Laserquelle zur Erzeugung eines zum UKP-Laserstrahl kollinearen, kontinuierlichen Stabilisierungslaserstrahls für das Plasma-Filament vorgesehen sein. Ein solcher zusätzlicher CW-Laserstrahl verläuft kollinear zum Ultrakurzpulslaser, erwärmt das Filament und erhöht dadurch die Leitfähigkeit des Filaments weiter. Hierbei ist die Verwendung von Wellenlängen im nahen bis fernen Infrarotbereich empfehlenswert.

Weitere Merkmale, Einzelheiten und Vorteile der Erfindung ergeben sich aus der nachfolgenden Beschreibung eines Ausführungsbeispiels anhand der beigefügten Zeichnung. Diese

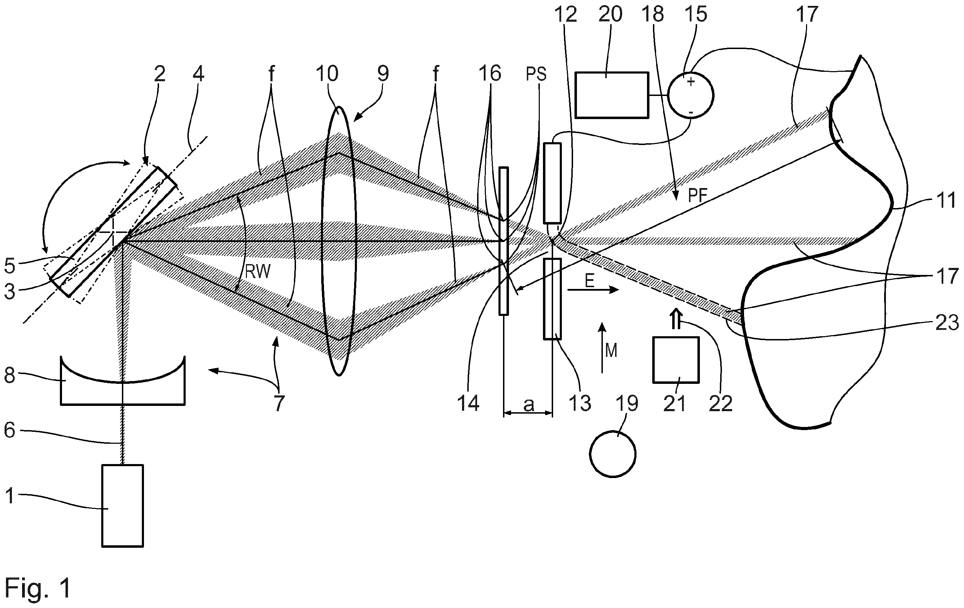

Fig. 1    zeigt eine schematische Gesamtdarstellung einer lichtbogenbasierten, laserunterstützten Bearbeitungsvorrichtung für ein Werkstück.

Wie aus der einzigen Figur hervorgeht, sind die Hauptkomponenten der erfindungsgemäßen Bearbeitungsvorrichtung eine Ultrakurzpuls- (UKP-) Laserquelle 1, bei der es sich beispielsweise um einen Titan-Saphir-Laser mit einer FWHM-Pulsdauer von 120 fs, einer Pulsenergie von 3 mJ und einer Pulswiederholrate von 1 kHz handeln kann. Dessen Wellenlänge liegt bei 800 nm.

Weiterhin ist eine Ablenkeinrichtung für den UKP-Laserstrahl 6 der Laserquelle 1 in Form eines um zwei Achsen 3, 4 verschwenkbaren Galvanometer-Scanners 2 vorgesehen. In der bevorzugten Ausführungsform befinden sich zwei orthogonal zueinander schwenkbare Spiegel in unmittelbarer Nachbarschaft zueinander an der Stelle des Spiegels 5 in Fig. 1. In der Zeichnung ist zwecks besserer Übersicht nur ein Spiegel 5 dargestellt. Durch eine entsprechende Ansteuerung des Galvanometer-Scanners 2 kann der UKP-Laserstrahl 6 in einen kegelförmigen Raumwinkel RW projiziert werden.

Die in der Bearbeitungsvorrichtung vorgesehene Abbildungsoptik 7 weist zum einen zwischen der UKP-Laserquelle 1 und dem Galvanometer-Scanner 2 eine eingangsseitige Aufweitungsoptik 8 beispielsweise in Form einer Konkavlinse auf. Ausgangsseitig vom Galvanometer-Scanner 2 zeigt die Abbildungsoptik eine hyperzentrische Projektionsoptik 9, die als sogenannter "4f-Aufbau" mit einer Konvex-Linse 10 ausgelegt ist. Eingangsseitig ist entsprechend der Ablenkspiegel 5 des Galvanometer-Scanners 2 im doppelten Abstand 2f der Brennweite f der Konvex-Linse 10 angeordnet. Ausgangsseitig, also in Richtung zu dem Werkstück 11 ergibt sich durch die Abbildungsoptik 7 ein ortsfester und vom Raumwinkel RW unabhängiger Pivot-Punkt 12, durch den alle vom Galvanometer-Scanner 2 abgelenkten Laserstrahlen 6 hindurchlaufen. Durch den Galvanometer-Scanner 2 können also die UKP-Laserstrahlen 6 innerhalb des verfügbaren Raumwinkels RW mit Hilfe der Abbildungsoptik 7 über einen definierten Bereich des Werkstücks 11 schnell und präzise geführt werden.

Um den Pivot-Punkt 12 herum ist eine Ringelektrode 13 angeordnet, in deren zentraler Öffnung 14 der Pivot-Punkt 12 der Vorrichtung angeordnet ist. Die Ringelektrode 13 und das Werkstück 11 sind mit einer Hochspannungsquelle 15 verbunden, wobei durch den davon erzeugten Potentialunterschied eine Lichtbogenentladung zwischen der Ringelektrode 13 und dem Werkstück 11 stattfinden kann. Die verwendbaren Arten der Hochspannungsquelle sind in der Beschreibungseinleitung abgehandelt. Zur Vermeidung von Wiederholungen wird darauf verwiesen.

Durch die Abbildungsoptik 7 wird nun der eingangsseitig aufgeweitete UKP-Laserstrahl 6 mit Hilfe der Projektionsoptik 9 jeweils in eine Fokusposition 16 fokussiert, die in einem bestimmten Abstand a vor dem Pivot-Punkt 12 der Anordnung liegt. In dieser Fokusposition 16 wird aufgrund der eingangs beschriebenen nicht-linearen Effekte ein Plasma-Filament 17 entlang des Laserstrahls 6 erzeugt. Mit Hilfe dieses Plasma-Filaments 17, das von seinem Startpunkt PS über die Filamentstrecke PF läuft, kann der zwischen der Hochspannungsquelle 15 und dem Werkstück 11 auftretende Lichtbogen 23 (gestrichelt dargestellt) kanalisiert und durch das Plasma-Filament 17 zum Werkstück 11 geführt werden. Insoweit ist es also möglich, durch die gezielte Führung des Laserstrahls 6 den Lichtbogen 23 im Wesentlichen unabhängig vom Verlauf des in Fig. 1 höchst schematisch angedeuteten elektrischen Feldes E zwischen Elektrode 13 und Werkstück 11 gezielt entlang der Oberfläche des Werkstücks 11 zu den gewünschten Bearbeitungspositionen zur Herstellung einer Schweißnaht, eines Schweißpunktes oder eines Schnittes zu führen.

Die Ringelektrode 13 ist in der Zeichnung flach dargestellt. Eine vorteilhafte Gestalt kann auch eine toroidale Form vorsehen.

Der Raumbereich 18 zwischen Ringelektrode 13 und Werkstück 11 kann mit jedwedem transparentem Medium gefüllt sein, in dem ein Plasma-Filament erzeugt werden kann. Es sind also nicht nur gasförmige Medien, sondern auch Flüssigkeiten oder entsprechende Festkörper denkbar. Eine Erhitzung des Mediums kann dabei die Bildung der Plasma-Filamente 17 unterstützen.

In der Zeichnung ist ferner eine Magnetfeld-Erzeugungseinrichtung 19 angedeutet, mit deren Hilfe ein das elektrische Feld E zwischen Ringelektrode 13 und Werkstück 11 überlagerndes, statisches oder dynamisches Magnetfeld M erzeugt werden kann. Damit kann der Lichtbogen gezielt in Richtung zum Plasma-Filament 17 gelenkt werden, was insbesondere bei einer vereinfachten Auslegung der Hochspannungselektrode etwa in Form einer Spitzenelektrode (nicht eigens dargestellt) von erheblichem Vorteil sein kann.

Eine weitere Zusatzeinrichtung ist durch einen ebenfalls in der Zeichnung schematisch angedeuteten Unterbrecher 20 realisiert, der die Entladungskapazität der Ringelektrode 13 begrenzt. Dieser Unterbrecher 20 kann bei Gleichspannungsbetrieb auf die Pulsrepititionsrate des UKP-Laserstrahls 6 synchronisiert sein. Bei Wechselspannungsbetrieb ist die Wechselspannungsfrequenz auf die Pulsrepititionsrate des UKP-Laserstrahls 6 abzustimmen.

Eine weitere Hilfseinrichtung zur Stabilisierung der jeweils durch einen Laserpuls gebildeten Plasma-Filamentes 17 kann durch eine Fluidstrahl-Erzeugungseinrichtung 21 realisiert werden, die einen Querstrahl 22 des (gasförmigen oder flüssigen) Mediums im Raumbereich 18 relativ zu den Plasma-Filamenten 17 erzeugt. Damit kann das durch das Plasma-Filament 17 erhitzte Medium im Raumbereich 18 nach einem Entladungslichtbogen daraus entfernt werden.

Zur Vermeidung von Unübersichtlichkeiten in der Zeichnung ist eine weitere, kontinuierliche Laserquelle zur Erzeugung eines zum UKP-Laserstrahl 6 kolinearen, kontinuierlichen Stabilisierungslaserstrahls für das Plasma-Filament 17 nicht eingezeichnet. Der Strahlverlauf des Stabilisierungslaserstrahls ist dabei koinzident mit dem des UKP-Laserstrahls 6.

**Patentansprüche**

1. Vorrichtung zur lichtbogenbasierten, laserunterstützten Bearbeitung eines Werkstücks (11), insbesondere zu dessen Lichtbogenschweißen oder -schneiden, umfassend

    - eine Ultrakurzpuls-(UKP-)Laserquelle (1) zur Erzeugung eines Ultrakurzpuls-(UKP-)Laserstrahls (6) mit einer Pulsdauer zwischen wenigen Femto- und wenigen Pikosekunden, insbesondere von 120 fs, und eines davon durch Selbstfokussierung des UKP-Laserstrahls (6) generierten Plasma-Filaments (17) über eine Filament-Strecke (PF) zwischen einem Filament-Startpunkt (PS) und dem Werkstück (11), wobei das Plasma-Filament (17) über die Filament-Strecke (PF) divergenzfrei ist,
    - eine UKP-Laserstrahl-Ablenkeinrichtung (2) zur Führung des UKP-Laserstrahls (6) in einen Raumwinkel (RW) in Richtung des Werkstückes (11),
    - eine mit der UKP-Laserstrahl-Ablenkeinrichtung (2) derart kooperierende Abbildungsoptik (7) für den UKP-Laserstrahl (6), dass der UKP-Laserstrahl (6) durch einen im Wesentlichen ortsfesten und raumwinkelunabhängigen Pivot-Punkt (12) läuft, der in der Filament-Strecke (PF) liegt, und
    - eine ortsfeste Hochspannungselektrode (13) bei dem Pivot-Punkt (12) zur Erzeugung eines filamentgeführten Lichtbogens (23) zwischen Hochspannungselektrode (13) und Werkstück (11),

    wobei der UKP-Laserstrahl (6) zur Erzeugung des Plasma-Filamentes (17) eine kritische Pulsspitzenleistung $P_{crit}$ gemäß der Beziehung

    $$P_{crit} = \frac{\alpha \cdot \lambda^2}{4\pi \cdot n_0 \cdot n_2}$$

    mit

    $\alpha$: Materialunabhängige Konstante
    $\lambda$: Wellenlänge des UKP-Laserstrahls
    $n_0$: optische Brechzahl des Mediums
    $n_2$: nichtlinearer Brechzahlkoeffizient

    aufweist bzw. überschreitet.

2. Vorrichtung nach Anspruch 1, **dadurch gekennzeichnet, dass** der Halbwertsbreite-Durchmesser des Plasma-Filaments (17) in der Größenordnung von Mikrometern, vorzugsweise bei 50 $\mu$m bis 150 $\mu$m und dessen Länge in der Größenordnung von einigen Zentimetern bis Metern liegen.

3. Vorrichtung nach einem der vorgenannten Ansprüche, **dadurch gekennzeichnet, dass** die UKP-Laserstrahl-Ablenkeinrichtung durch einen zweiachsigen Galvanometer-Scanner (2) oder akusto-optischen Deflektor gebildet ist.

4. Vorrichtung nach einem der vorgenannten Ansprüche, **dadurch gekennzeichnet, dass** die Abbildungsoptik (7) eine eingangsseitige Aufweitungsoptik (8) und/oder eine werkstückseitig hyperzentrische Projektionsoptik (9) aufweist, so dass die Fokusposition (16) des UKP-Laserstrahls (6) zwischen der einfachen Linsenbrennweite (f) der Projektionsoptik (9) und dem Pivot-Punkt (12) liegt.

5. Vorrichtung nach Anspruch 4, **dadurch gekennzeichnet, dass** die Projektionsoptik (9) in einem 4f-Aufbau mit einer Konvex-Linse (10) derart angeordnet ist, dass eingangsseitig die UKP-Laserstrahl-Ablenkeinrichtung (2) und werkstückseitig der Pivot-Punkt (12) jeweils in einem Abstand der doppelten Brennweite (2f) von der Konvex-Linse (10) angeordnet sind.

**6.** Vorrichtung nach einem der vorgenannten Ansprüche, **dadurch gekennzeichnet, dass** die Hochspannungselektrode durch eine Ringelektrode (13) gebildet ist, in deren Ringöffnung (14) der Pivot-Punkt (12) liegt und die vorzugsweise als toroidale Elektrode ausgebildet ist.

**7.** Vorrichtung nach Anspruch 6, **dadurch gekennzeichnet, dass** die als toroidale Elektrode ausgebildete Ringelektrode (13) innen einen Hohlraum aufweist und über entsprechende Anschlüsse verfügt, so dass ein Kühlmedium durch das Innere der Elektrode geleitet werden kann.

**8.** Vorrichtung nach einem der Ansprüche 1 bis 5, **dadurch gekennzeichnet, dass** die Hochspannungselektrode als Spitzenelektrode, Gitterelektrode, Plattenelektrode oder massive Elektrode bestehend aus einem leitfähigen, transparenten Material ausgebildet und vorzugsweise mit einer Gleich- oder Wechselspannung in einer Größenordnung von 100 kV bis wenige MV betrieben ist.

**9.** Vorrichtung nach einem der vorgenannten Ansprüche, **gekennzeichnet durch** ein transparentes Medium zur Ausbildung des Plasma-Filamentes (17) zwischen Pivot-Punkt (12) und Werkstück (11) angeordnet, welches Medium gasförmig, flüssig oder fest und vorzugsweise erhitzt ist und/oder welchem Medium Zusatzstoffe in dampfförmigem oder aerosolartigen Zustand beigemischt sind.

**10.** Vorrichtung nach einem der vorgenannten Ansprüche, **dadurch gekennzeichnet, dass** der filamentgeführte Lichtbogen (23) bei einem Werkstück (11) aus isolierendem Material durch die Hochspannungselektrode (13) allein ohne eine durch das Werkstück gebildete Gegenelektrode generierbar ist.

**11.** Vorrichtung nach einem der vorgenannten Ansprüche, **dadurch gekennzeichnet, dass** ein das elektrische Feld (E) zwischen Hochspannungselektrode und Werkstück überlagerndes, statisches oder dynamisches Magnetfeld (M) zur Lenkung der elektrischen Entladung an der Hochspannungselektrode (13) in Richtung zum Plasma-Filament (17) vorgesehen ist.

**12.** Vorrichtung nach Anspruch 10, **dadurch gekennzeichnet, dass** die Entladungskapazität der Hochspannungselektrode (13) durch einen auf die Pulsrepetitionsrate des UKP-Laserstrahls (6) synchronisierten Unterbrecher (20) bei Gleichspannungsbetrieb oder eine auf die Pulsrepetitionsrate des UKP-Laserstrahls (6) abgestimmte Wechselspannungsfrequenz bei Wechselspannungsbetrieb begrenzt ist.

**13.** Vorrichtung nach einem der vorgenannten Ansprüche, **gekennzeichnet durch** eine Fluidstrahl-Erzeugungseinrichtung (21) zur Entfernung des durch das Plasma-Filament (17) erhitzten Mediums nach einem Entladungslichtbogen (23), wobei vorzugsweise ein inertes Gas in der Fluidstrahl-Erzeugungseinrichtung (21) verwendet wird, um die Oxidation der Elektroden- (13) und Werkstückoberfläche (11) zu minimieren.

**14.** Vorrichtung nach einem der vorgenannten Ansprüche, **gekennzeichnet durch** eine weitere Laserquelle zur Erzeugung eines zum UKP-Laserstrahl (6) kollinearen, kontinuierlichen Stabilisierungslaserstrahls für das Plasma-Filament (17).

**Claims**

**1.** Device for the electric-arc based, laser-supported machining of a workpiece (11), in particular for arc welding or cutting the latter, comprising

- an ultra-short pulse (UKP) laser source (1) for producing an ultra-short pulse (UKP) laser beam (6) with a pulse length of between a few femtoseconds and a few picoseconds, in particular 120 fs, and a plasma filament (17) generated by the latter by self-focussing the UKP laser beam (6) over a filament section (PF) between a filament starting point (PS) and the workpiece (11), wherein the plasma filament (17) is non-diverging over the filament section (PF),
- a UKP laser beam deflector (2) for guiding the UKP laser beam (6) at an angle (RW) in the direction of the workpiece (11),
- imaging optics (7) cooperating with the UKP laser beam deflector (2) for the UKP laser beam (6) such that the UKP laser beam (6) runs through an essentially fixed and angle-dependent pivot point (12) which lies in the filament section (PF), and
- a fixed high-voltage electrode (13) at the pivot point (12) for producing a filament-guided electric arc (23) between the high voltage electrode (13) and workpiece (11),

wherein the UKP laser beam (6) for producing the plasma filament (17) comprises or exceeds a critical pulse peak output $P_{crit}$ according to the relationship

$$P_{crit} = \frac{\alpha \cdot \lambda^2}{4\pi \cdot n_0 \cdot n_2}$$

where

$\alpha$: material-dependent constant
$\lambda$: wavelength of the UKP laser beam
$n_0$: optical refractive index of the medium
$n_2$: non-linear refractive index coefficient.

2. Device according to claim 1, **characterised in that** the peak width at half-height diameter of the plasma filament (17) is in the order of micrometres, preferably 50 $\mu$m to 150 $\mu$m, and its length is in the order of several centimetres to metres.

3. Device according to any one of the preceding claims, **characterised in that** the UKP laser beam deflector is in the form of a biaxial galvanometer scanner (2) or acoustic optical deflector.

4. Device according to any one of the preceding claims, **characterised in that** the imaging optics (7) comprises an input-side expansion optics (8) and/or a workpiece-side hypercentric projection optics (9), so that the focus position (16) of the UKP laser beam (6) is between the simple lens focal distance (f) of the projection optics (9) and the pivot point (12).

5. Device according to claim 4, **characterised in that** the projection optics (9) is arranged in a 4f structure with a convex lens (10) such that on the input side the UKP laser beam deflector (2) and on the workpiece side the pivot point (12) are arranged respectively at a distance of twice the focal length (2f) from the convex lens (10).

6. Device according to any one of the preceding claims, **characterised in that** the high voltage electrode is formed by a ring electrode (13), in the ring opening (14) of which the pivot point (12) is located and which is preferably designed in the form of a toroidal electrode.

7. Device according to claim 6, **characterised in that** the ring electrode (13) designed as a toroidal electrode has a cavity on the inside and has corresponding connection points, so that a coolant can be directed through the inside of the electrode.

8. Device according to any one of claims 1 to 5, **characterised in that** the high voltage electrode is designed in the form of a tip electrode, grid electrode, plate electrode or solid electrode consisting of a conductive, transparent material and is preferably operated using direct or alternating voltage of in the order of 100 kV to a few MV.

9. Device according to any one of the preceding claims, **characterised by** a transparent medium for forming the plasma filament (17) arranged between the pivot point (12) and workpiece (11), which medium is gaseous, liquid or solid and is preferably heated and/or to which medium additives are added in a vaporous or aerosol state.

10. Device according to any one of the preceding claims, **characterised in that** the filament-guided electric arc (23) can be generated with a workpiece (11) made from insulating material by the high voltage electrode (13) alone without a counter electrode formed by the workpiece.

11. Device according to any one of the preceding claims, **characterised in that** a static or dynamic magnetic field (M) overlayering the electric field (E) between the high voltage electrode and workpiece is provided for directing the electric discharge at the high voltage electrode (13) in the direction of the plasma filament (17).

12. Device according to claim 10, **characterised in that** the discharge capacity of the high voltage electrode (13) is limited by a circuit breaker (20) synchronised to the pulse repetition rate of the UKP laser beam (6) during direct voltage operation or an alternating voltage frequency adjusted to the pulse repetition rate of the UKP laser beam (6) during alternating voltage operation.

13. Device according to any one of the preceding claims, **characterised by** a fluid jet generating device (21) for removing the medium heated by the plasma filament (17) after a discharge arc (23), wherein preferably an inert gas is used in the fluid jet generating device (21) in order to minimise the oxidation of the electrode surface (13) and workpiece surface (11).

14. Device according to any one of the preceding claims, **characterised by** a further laser source for producing a continual stabilising laser beam for the plasma filament (17) which is collinear to the UKP laser beam (6).

**Revendications**

1. Dispositif d'usinage à l'arc électrique assisté par laser d'une pièce (11), en particulier pour son soudage ou sa découpe à l'arc électrique, comprenant :

  - une source laser à impulsions ultracourtes (UKP) (1) pour produire un rayon laser à impulsions ultracourtes (UKP) (6) ayant une durée d'impulsions comprise entre quelques femtosecondes et quelques picosecondes, en particulier de 120 fs, et d'un filament de plasma (17) généré par celui-ci par auto-focalisation du rayon laser UKP (6) via un segment de filament (PF) entre un point de départ (PS) du filament et la pièce (11), dans lequel le filament de plasma (17) est exempt de divergence sur le segment de filament (PF),

- un dispositif (2) de déviation du rayon laser UKP pour guider le rayon laser UKP (6) dans un angle solide (RW) dans la direction de la pièce (11),
- une optique d'imagerie (7) coopérant avec le dispositif (2) de déviation du rayon laser UKP pour le rayon laser UKP (6) de sorte que le rayon laser UKP (6) s'étende par un point pivot (12) sensiblement fixe et indépendant de l'angle solide, lequel point se trouve dans le segment de filament (PF), et
- une électrode haute tension fixe (13) au point pivot (12) pour obtenir un arc électrique (23) guidé par le filament entre l'électrode haute tension (13) et la pièce (11),

dans lequel le rayon laser UKP (6) pour la production du filament de plasma (17) présente ou dépasse une puissance maximale d'impulsions critique $P_{crit}$ selon la relation :

$$P_{crit} = \frac{\alpha.\lambda^2}{4\pi.n_0.n_2}$$

où

$\alpha$ est une constante indépendante des matériaux,
$\lambda$ est la longueur d'onde du rayon laser UKP,
$n_0$ est l'indice de réfraction du milieu et
$n_2$ est un coefficient de réfraction non linéaire.

2. Dispositif selon la revendication 1, **caractérisé en ce que** le diamètre de la largeur de valeur moyenne du filament de plasma (17) se situe dans un ordre de grandeur de micromètres, de préférence à 50 $\mu$m à 150 $\mu$m et dont la longueur se situe dans un ordre de grandeur de quelques centimètres à des mètres.

3. Dispositif selon l'une quelconque des revendications précédentes, **caractérisé en ce que** le dispositif de déviation du rayon laser UKP est formé par un galvanomètre-scanneur biaxial (2) ou par un déflecteur acousto-optique.

4. Dispositif selon l'une quelconque des revendications précédentes, **caractérisé en ce que** l'optique d'imagerie (7) présente une optique d'élargissement côté entrée (8) et/ou une optique de projection hypercentrique côté pièce (9) de sorte que la position focale (16) du rayon laser UKP (6) se situe entre la simple distance focale (f) de la lentille de l'optique de projection (9) et le point pivot (12).

5. Dispositif selon la revendication 4, **caractérisé en ce que** l'optique de projection (9) est agencée dans une structure 4f avec une lentille convexe (10) de sorte que, côté entrée, le dispositif (2) de déviation du rayon laser UKP et, côté pièce, le point pivot (12) soient agencés respectivement à une distance correspondant à la double distance focale (2f) de la lentille convexe (10).

6. Dispositif selon l'une quelconque des revendications précédentes, **caractérisé en ce que** l'électrode haute tension est formée par une électrode annulaire (13), dans l'ouverture annulaire (14) de laquelle est situé le point pivot (12) et qui se présente de préférence sous la forme d'une électrode toroïdale.

7. Dispositif selon la revendication 6, **caractérisé en ce que** l'électrode annulaire (13) conformée en électrode toroïdale présente à l'intérieur un espace creux et dispose de raccords correspondants de sorte qu'un réfrigérant puisse être acheminé à l'intérieur de l'électrode.

8. Dispositif selon l'une quelconque des revendications 1 à 5, **caractérisé en ce que** l'électrode haute tension est conformée en électrode à pointe, en électrode à grille, en électrode à plaque ou en électrode massive constituée d'un matériau conducteur transparent et est commandée de préférence par une tension continue ou alternative d'un ordre de grandeur de 100 kV à quelques MV.

9. Dispositif selon l'une quelconque des revendications précédentes, **caractérisé par** un milieu transparent pour la formation du filament de plasma (17) agencé entre le point pivot (12) et la pièce (11), lequel milieu est gazeux, liquide ou solide et de préférence chauffé et/ou auquel milieu des matériaux d'apport sont mélangés sous la forme de vapeur ou à l'état d'aérosol.

10. Dispositif selon l'une quelconque des revendications précédentes, **caractérisé en ce que** l'arc électrique guidé par filament (23) peut être généré dans une pièce (11) constituée d'un matériau isolant par l'électrode haute tension (13) seulement sans contre-électrode formée par la pièce.

11. Dispositif selon l'une quelconque des revendications précédentes, **caractérisé en ce qu'**il est prévu un champ magnétique statique ou dynamique (M) se superposant au champ électrique (E) entre l'électrode haute tension et la pièce pour dévier la décharge électrique sur l'électrode haute tension (13) dans la direction du filament de plasma (17).

12. Dispositif selon la revendication 10, **caractérisé en ce que** la capacité de décharge de l'électrode haute tension (13) est limitée par un interrupteur (20) synchronisé sur le taux de répétition des impulsions du rayon laser UKP (6) dans le cas d'un fonctionnement sous tension continue et par une fréquence de la tension alternative réglée sur le taux de répétition des impulsions du rayon laser UKP (6) lors d'un fonctionnement sous tension alternative.

13. Dispositif selon l'une quelconque des revendications précédentes, **caractérisé par** un dispositif de production de rayon de fluide (21) pour éliminer le milieu chauffé par le filament de plasma (17) après un arc électrique de décharge (23), dans lequel, de préférence, on utilise un gaz inerte dans le dispositif de production de rayon de fluide (21) pour minimiser l'oxydation de la surface de l'électrode (13) et de la surface de la pièce (11).

14. Dispositif selon l'une quelconque des revendications précédentes, **caractérisé par** une autre source laser pour la production d'un rayon laser de stabilisation continu colinéaire avec le rayon laser UKP (6) pour le filament de plasma (17).

Fig. 1

EP 2 783 787 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6483077 B1
- WO 2007145702 A2
- DE 10213044 B3
- WO 2011029462 A1

**In der Beschreibung aufgeführte Nicht-Patentliteratur**

- **R. KILLING ; U. KILLING.** Kompendium der Schweißtechnik - Band 1: Verfahren der Schweißtechnik. Verlag für Schweißen und verwandte Verfahren DVS-Verlag GmbH, 2002
- Numerische und experimentelle Untersuchungen zur Wechselwirkung zwischen einem Plasmalichtbogen und einem Laserstrahl geringer Leistung. **M. SCHNICK ; S. ROSE ; U. FÜSSEL ; A. MAHRLE ; C. DEMUTH ; E. BEYER.** DVS-Bericht, Düsseldorf. DVS-Verlag, 2011, vol. 275, 612-617
- Cutting and welding with the new high brightness lasers. **T. SEEFELD ; W. O'NEILL.** The Laser User. Spring, 2008, vol. 50, 32-37
- **G. FIBICH ; A.L. GAETA.** Critical power for self-focusing in bulk media and in hollow waveguides. *Opt. Lett.,* 2000, vol. 25 (5), 335-337
- **A. BRAUN ; G. KORN ; X. LIU ; D. DU ; J. SQUIER ; G. MOUROU.** Self-channeling of high-peak-power femtosecond laser pulses in air. *Opt. Lett.,* 1995, vol. 20 (1), 73-75